# EUROPEAN PATENT SPECIFICATION

(11) **EP 2 233 876 B1**
(45) Date of publication and mention of the grant of the patent: **25.07.2018**
(21) Application number: 09819112.5
(22) Date of filing: 30.09.2009
(51) Int. Cl.: F28F 9/18, B23K 9/028, B23K 9/23, F22B 37/22

(54) **WELDED HEADER/NOZZLE STRUCTURE**
GESCHWEISSTE HEADER-/DÜSENSTRUKTUR
STRUCTURE DE COLLECTEUR/BUSES SOUDÉE

(30) Priority: 07.10.2008 JP 2008260701
(43) Date of publication of application: 29.09.2010
(73) Proprietor: Mitsubishi Heavy Industries, Ltd., Tokyo 108-8215 (JP)
(72) Inventor: KOMAI, Nobuyoshi, Nagasaki-shi Nagasaki 851-0392 (JP); MIYAZAWA, Takeshi, Nagasaki-shi Nagasaki 850-8610 (JP); NISHI, Fumio, Nagasaki-shi Nagasaki 850-8610 (JP); TOKIYOSHI, Takumi, Nagasaki-shi Nagasaki 851-0392 (JP); SAITO, Nobuhiko, Nagasaki-shi Nagasaki 851-0392 (JP); IMAZATO, Toshiyuki, Nagasaki-shi Nagasaki 851-0392 (JP); HOKANO, Masahiko, Nagasaki-shi Nagasaki 850-8610 (JP)
(74) Representative: Henkel, Breuer & Partner
(86) International application number: PCT/JP2009/067016
(87) International publication number: WO 2010/041577

(56) References cited:
- JP-A- 7 293 804
- JP-A- 8 152 291
- JP-A- 52 070 201
- JP-A- H08 152 290
- JP-A- 2004 034 940
- JP-A- 2004 205 059
- US-A- 4 703 885

## Description

### BACKGROUND OF THE INVENTION

### Field of the Invention

The present invention relates to a welding structure of a tube header and tube stubs, especially those suitable for use in a final superheater and a reheater of a boiler installed in a thermal power plant.

### Description of the Related Art

Currently, there are mainly three methods to generate power, that is nuclear power, thermal power and hydraulic power. Among those, thermal power generation is a very potential method for generating electricity, which is comparatively safe and responsive to load change and is expected to remain valuable in the field of power generation technology.

As a main component of a boiler for generating power in a thermal power plant, there is a tube header which is installed in each of various devices such as an evaporator, a superheater and a reheater and which distributes or collects inner fluids. The tube header has a plurality of mount holes for mounting heat exchange tubes and pipes.

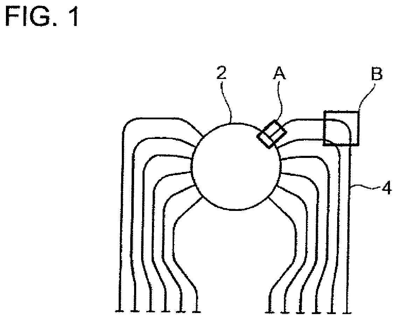

FIG.1 is a schematic view showing an overall structure of tube stubs having bended sections respectively and the tube header to which the tube stubs are welded. The plurality of tube stubs 4 each having a bended section are welded to the tube header 2 of a straight pipe type so as to form a tube header part. For instance, in a boiler for generating electricity, there is a plurality of tube stubs 4 mounted on one tube header 2 by welded connection.

As the tube header 2 is used at a high temperature in a final superheater and a reheater of a boiler, ferritic heat-resisting steel is often used, such as 1Cr steel, 2Cr steel, 9Cr steel and 12Cr steel. The ferritic heat resisting steels (hereinafter referred to as ferritic steel) have high-temperature strength, low thermal expansion coefficiency in the perspective of preventing thermal deformation and thermal stress, and high heat-transfer coefficient. Further, it is common to use ferritic steels such as 1Cr steel, 2Cr steel, 9Cr steel and 12Cr steel for the tube stubs same as the tube header so as not to generate thermal stress. Herein, the tube stubs are made of ferritic steel such as JIS STBA28, JIS STBA23, JIS STBA24 as well as STBA23J1, STBA28, STBA29 and SUS410J3TB of Japanese standards for Thermal Power Technology and the tube header is made of materials equivalent of the above standard. The materials of ASME equivalent of the above can be used as well.

Recently, in thermal power plants, frequent start-stop operation is needed to conform to demand fluctuation of electricity. Under such operation conditions of the thermal power plant, some damages caused by the thermal stress from the temperature difference between the tube stubs and ceiling wall of a furnace or self-weight of the heat exchanger tubes are acknowledged, such as fatigue damages or creep damages at the welding portion on the tube header. Especially, as for a tube header with tube stubs welded thereon of a final superheater and reheater in a USC boiler (USC: Ultra Super Critical) whose maximum steam condition is improved to about 600°C in order to enhance power generation efficiency, when the tube header with tube stubs are made of ferritic steel, a welded heat-affected zone of the materials has lower creep strength in comparison with the base material, which makes it prone to creep damage. As a result, regular inspections or changing of tubes are required more frequently than before.

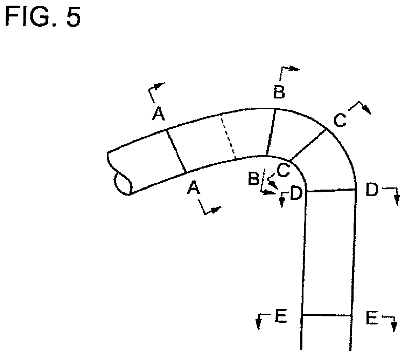

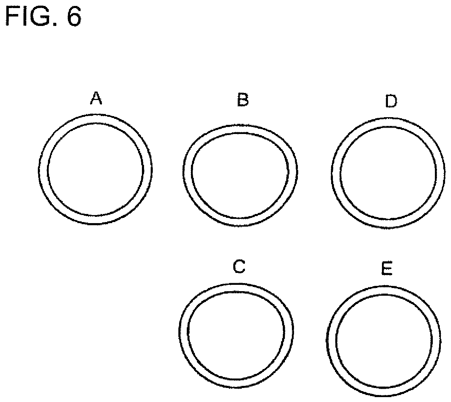

FIG.5 is a side view of a bended section (section B of FIG.1) of the tube stub 4. FIG.6 illustrates sectional views of the tube stub 4 taken along the lines A-A, B-B, C-C, D-D, and E-E of FIG.5. As shown in FIG. 6, a cross-sectional shape of the tube stub 4 is not uniform but flattened at the bended section. Thus, when internal pressure acts thereon, bending stress takes place.

Further, another factor of occurrence of the creep damages may be decline in the creep strength at a dorsal side of the bended section due to decreased thickness and plastic deformation thereof in comparison to a straight section thereof.

This has already been verified by creep tests in which internal pressure was loaded to a test piece of a tube type having a bended section and made of 12Cr steel. There was substantial creep damage to the bended section compared to the straight section and the test piece exploded from the bended section and it was affirmed that the bending stress at the bended section was a factor to the creep damage.

A yet another factor of occurrence of the creep damages is that the steam temperature varies from one tube stub to another. Thus, the temperature of the tube stub subjected to the steam temperature becomes higher than a set temperature, and thus experiences a shorter creep life than other tube stubs.

In order to solve the problems caused from the creep damage, it is possible to make the tube stubs thicker but this is not economical and still fails to solve the problem within realistic dimensions of the tube stub. Therefore, it is difficult to suppress the occurrence of the creep damage simply by making the tube stub walls thicker.

Patent Document 1 discloses a structure of welding tube stubs of ferritic steel and a header of ferritic steel, in which a tube of austenite steel is interposed between the tube stubs and the tube header and the tube is set to the length which is extended to the position separated by 1/2 or more of the outer diameter of the tube from the welding end of the tube to the header. Further, in this welding structure, a protrusion part is formed on the header at the welding position by cutting around the welding position while a tip of the tube is cut to form a tapered end so as to form a butted groove with the protrusion part of the header. The butted groove is a root and the root of the protrusion part is made longer than the root of the header.

However, according to Patent Document 1, not only that this structure requires more components by interposing the tube of austenite steel between the tube header and tube stubs but it takes twice more hours for welding the parts as the tube stubs of ferritic steel and the tube of austenite steel, and the header of ferritic steel and the tube of austenite steel needed to be welded respectively. Therefore, when the structure disclosed in Patent Document 1 is applied to a boiler for power generation having hundreds of tube stubs to be welded to a header, it takes enormous time and money.

Furthermore, in the case of the tube stubs having bended sections respectively, the welding structure disclosed in Patent Document 1 hardly suppresses the creep damage at the bended sections of the tube stubs.

Moreover, the protrusion part of the header and the cut end of the tube are joined so as to form a trapezoidal groove and thus the structure around the welding position becomes complex and the workability at the welding position is compromised. In addition, at the welding end of the tube stub at which the bending stress works heavily, it may be difficult to ensure sufficient diameter of the tube stub and the welding material together.

Another prior art welding structure is disclosed in JP H08 152290

### [Prior art]

- [Patent Document 1]: JP8-152991A

### SUMMARY OF THE INVENTION

In view of the problems above, an object of the present invention is to provide a welding structure of a tube header and tube stubs which successfully improves the durability thereof against creep and fatigue damage of the tube stubs without interposing a different material between the tube header and the tube stubs or additional components.

### [Means to solve the problems]

To achieve the object, the present invention proposes a welding structure of a tube header and tube stubs according to claim 1.

The plurality of tube stubs are made of austenite stainless steel which has excellent creep strength so as to improve the durability thereof against the bending stress thereof and temperature fluctuation. Further, the austenite stainless steel has superior heat resistance and thus it can be used in a boiler under higher steam temperature condition than a conventional one. And simply changing the material of the tube stubs of the structure same as the conventional case from ferritic steel of the conventional case to austenite stainless steel of the present embodiment, the steam temperature condition can be improved from 600°C to 630°C.

As for the coefficiency of thermal expansion (1/°C) when the temperature is raised from the ambient temperature to 600°C, the coefficiency of 9Cr steel which is one of ferritic steels is approximately 12.6×10⁻⁶ and that of austenite steel is approximately 18.4×10⁻⁶. Therefore, by using as a welding material nickel base alloy whose thermal expansion coefficiency is 16.0×10⁻⁶ between that of 9Cr steel and that of austenite stainless steel, the thermal stress occurred between the weld metal and 9Cr steel and between the weld metal and austenite stainless steel can be minimized. Examples of nickel base alloy as a weld material are inconel-type weld materials specified in JISZ3334 YniCr-3, AWS A5.14 ER NiCr-3 and the like.

By using nickel base alloy as a weld material in the above manner, the thermal stress between the welding material and the tube stubs of austenite stainless steel and also between the welding material and the tube header of ferritic steel is suppressed but cannot be completely diminished.

However, according to the analysis of the thermal stress we conducted, it was found that austenite stainless steel used for the tube stubs had such high creep strength that the creep and the fatigue damage due to the thermal stress was too small to cause an practical issue.

Further, it is preferable that annular chases are respectively formed on the outer surface of the tube header to surround welding portions of the tube header onto which the tube stubs are to be welded; joining portions are formed on an inner side of the annular chases; butt grooves are formed between the tube stubs and the joining portions by joining surfaces of the tube stubs and the joining portions in a continuous manner, the tube stubs having a diameter that is substantially same as those of the joining portions; and the butt grooves formed between the tube stubs and the joining portions are welded by using the nickel base alloy as a welding material.

The joining portions are formed on the tube header so that the tube stubs of austenite stainless steel with high thermal heat expansion rate and the tub header can be connected in a continuous manner, and the tube stubs and the joining portions of the tube header are butted so that thermal stress can be reduced by the annular chases.

The above structure is similar to that of butt-welding of small diameter tubes and the durability of butt welding of the small diameter tubes are already well proven.

Further, the shape of the annular chases such as the depth thereof can be set depending on the temperature or bending stress. However, the tube header must have thickness enough to accommodate the depth of the chases.

In this, the absolute figure of the thermal stress occurred between the weld material and the tube stubs of austenite stainless steel and between the weld material and the tube header of ferritic steel is so small that there is no practical issue of the creep damage or fatigue damage.

It is also preferable that through-holes are formed on the outer surface of the tube header; ends of the tube stubs are respectively inserted in the through-holes; and the ends of the tube stubs inserted in the through-holes are welded to an inner surface of the tube header by using the nickel base alloy as a welding material.

In this, the bending stress of the tube stub due to the thermal stress is largest at contact positions where the tube stubs and the outer surface of the tube header are in contact. However, there is no welding at the contact positions and thus the creep damage due to the bending stress is very little even when the bending stress acts at the contact positions.

Further, in order to insert the tube stubs in the through-holes, the tube stubs may need to be cooled beforehand or the tube header may need to be warmed beforehand.

Furthermore, the tube header needs to be seal-welded from inside and the tube header used in a final superheater or reheater of a USC boiler usually has an inner diameter of 300mm. If it is difficult to manually perform the welding, a robot for automatic welding or the like may be used.

At the same time, the tube stubs of austenite stainless steel are subjected to compression stress from the tube header of ferritic steel. However, the creep life of the tube stubs of austenite stainless steel is higher than that of the tube header made of ferritic steel and thus there is enough creep strength at the contact positions.

### [Effects of the invention]

According to the present invention described above, a welding structure of a tube header and tube stubs which successfully improves the durability thereof against creep and fatigue damages of the tube stubs without interposing a different material between the tube header and the tube stubs or additional components can be provided.

### BRIEF DESCRIPTION OF THE DRAWINGS

FTG.1 is a schematic view of an overall structure of tube stubs each having a bended section and a tube header having the stubs welded thereon.
FIG.2 is a sectional view of the tube header with the tube stubs welded thereon in relation to a first example.
FIG.3 is a sectional view of the tube header with the tube stubs welded thereon in relation to a second example.
FIG.4 is a sectional view of the tube header with the tube stubs welded thereon according to the invention.
FIG.5 is a side view illustrating a bended section of the tube stub.
FIG.6 shows sectional views of the tube stub taken along lines A-A, B-B, C-C, D-D, and E-E of FIG.5

### DETAILED DESCRIPTION OF THE PREFERRED EMBODIMENTS

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present.

### [First Example]

In a first example, an example structure of a tube header and a plurality of tube stubs, each of which has a bended section, to be used in a final superheater and a reheater of USC boiler of 600°C grade. The overall structure of the tube header and the tube stubs welded thereto is the same as the known structure shown in FIG.1 and thus it will not be explained further.

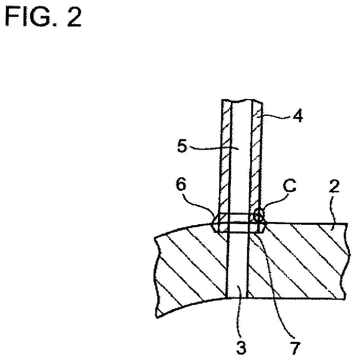

FIG.2 is a sectional view of the tube header with the tube stubs welded thereon in relation to the first example and illustrates an enlarged view of a section A of FIG.1.

In FIG.2, a tube header 2 made of 9Cr steel of ferritic steel has through-holes 3 formed on the outer surface thereof. Around each of the through-holes, a concave part 7 is formed by chipping off the edge of the through-hole of the tube header 2, an edge of a tube stub 4 is butted against and connected to the concave part 7 such that a passage 5 inside the tube stub 4 having a bended section faces the through-hole 3. Herein, the tube stubs are made of austenite stainless steel such as JIS SUS304, JIS SUS 321HTB, and JIS SUS347HTB as well as SUSTP347HTB, SUS321J1HTB, SUS321J4HTB, SUS310J1TB, SUS310J2TB, SUS310J3TB and the like of Japanese standards for Thermal Power Technology and materials equivalent of the above according to ASME.

The above connection of the tube stub to the tube header is performed by fillet welding using Ni-based alloy such as inconel alloy as a welding material thereby forming a welding spot 6.

As described above, the tube header 2 and the tube stubs 4 are welded together and when bending stress acts on the tube stubs, the part most susceptible to the creep damage is the welding end of the tube stub 4 (section C of FIG.2) at which there is a discontinuity in the welding shape and is adjacent to a weld heat-affected zone. However, in the example, as the tube stubs are made of austenite stainless steel which has an excellent creep strength, the durability of the tube stubs 4 against the bending stress is significantly improved and thus the creep damage to the welding ends of the tube stubs (section C of FIG.2) due to the bending stress on the tube stubs is suppressed to the degree that practically causes no issues.

The bending stress takes place when there is an internal pressure at the bending section where the cross-sectional shape thereof is flattened regardless of materials thereof. However, when tube stubs are made of austenite stainless steel, which has better creep strength than ferritic steel, it is possible to set a tube thickness in consideration of the creep durability at the bended section so as to solve this issue.

As for the coefficiency of thermal expansion (1/°C) when the temperature is raised from the ambient temperature to 600°C, the coefficiency of 9Cr steel of which the tube header 2 is made is approximately 12.6×10⁻⁶ and that of austenite steel of which the tube stubs are made is approximately 18.4×10⁻⁶. Further, the thermal expansion coefficiency of inconel which is nickel base alloy and used as the welding material herein, is 16.0×10⁻⁶ between that of 9Cr steel and that of austenite stainless steel. Therefore, nickel base alloy is used as a welding material so as to suppress the thermal stress occurred between the weld metal and 9Cr steel and between the weld metal and austenite stainless steel.

However, there is a large difference of the thermal expansion coefficiency between austenite stainless steel and 9Cr steel as explained above and thus even with nickel base alloy used as the welding material, the thermal stresses between the welding material and the tube stubs of austenite stainless steel and between the welding material and the tube header of ferritic steel are suppressed but cannot be completely diminished.

Therefore, analysis of the thermal stress at the welding portions were conducted and it was found that austenite stainless steel used for the tube stubs had such high creep strength that the creep and the fatigue damage due to the thermal stress was too small to cause any practical issue.

Furthermore, austenite stainless steel has excellent corrosion resistance and thus it can be used in a boiler under higher steam temperature condition than a conventional one. And simply changing the material of the tube stubs with the structure same as the conventional case from ferritic steel of the conventional case to austenite stainless steel of the present embodiment, the steam temperature condition can be improved from 600°C to 630°C.

As explained above, by using austenite stainless steel for the tube stubs, the bending stress caused by the bended section where a cross-sectional shape is flatted and the damages at the welding portions of the tube stubs can be minimized and further, tolerance for temperature fluctuation is significantly improved. As a result, the creep damage can be suppressed to the degree that practically causes no issue.

Moreover, by using austenite stainless steel for the tube stubs, the creep damage due to the thermal stress becomes so minimal that it practically causes no issue.

### [Second Example]

In a second example, another example structure of a tube header and a plurality of tube stubs to be used in a final superheater and a reheater of USC boiler of 600°C grade is explained.

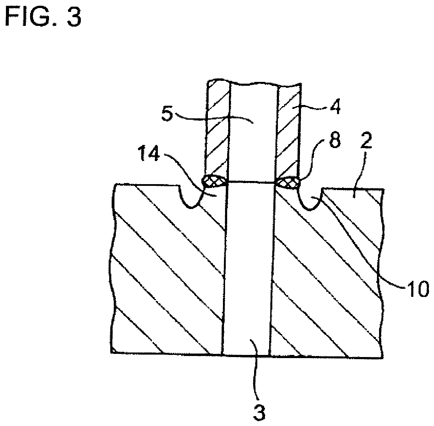

FIG.3 is a sectional view of the tube header with the tube stubs welded thereon in relation to the second preferred embodiment.

In FIG.3, the tube header 2 made of 9Cr steel of ferritic steel has through-holes 3 formed on the outer surface thereof and the tube stubs are arranged such that the through holes 3 face the passages 5 of the tube stubs 4 with bended sections respectively. On the outer surface of the tube header 2, annular chases 10 are respectively formed to surround joining portions 14 of the tube header. Further, butt grooves are formed between the tube stubs 4 and the joining portions 14 by joining surfaces of the tube stubs and the joining portions in a continuous manner and the tube stubs 4 having a diameter that is substantially same as those of the joining portions 14.

In order to weld the tube header 2 and the tube stubs having the above structures, the butt grooves formed between the tube stubs and the joining portions 14 are welded by using the nickel base alloy as a welding material and welding portions 8 are formed there.

According to the second example, by forming the annular chases 10, in addition to the effects similar to those obtained in the first example, the thermal stress due to the difference in material of the tube header 2 and the tube stubs 4 can be reduced.

According to the thermal stress analysis, with the above structure, the absolute figure of the thermal stress occurred between the weld material and the tube stubs of austenite stainless steel and between the weld material and the tube header of ferritic steel is so small that there is no practical issue of the creep damage.

As explained above, by using austenite stainless steel for the tube stubs, the bending stress caused by the bended section where a cross-sectional shape is flatted and the damages at the welding portions of the tube stubs can be minimized and further, tolerance for temperature fluctuation is significantly improved. As a result, the creep damage can be suppressed to the degree that practically causes no issue.

Moreover, by using austenite stainless steel for the tube stubs, the creep damage due to the thermal stress becomes so minimal that it practically causes no issue.

### [First embodiment]

In a first embodiment, different from those of the first and second examples, another example structure of a tube header tube stubs used in a final superheater and a reheater of USC boiler of 600°C grade is explained.

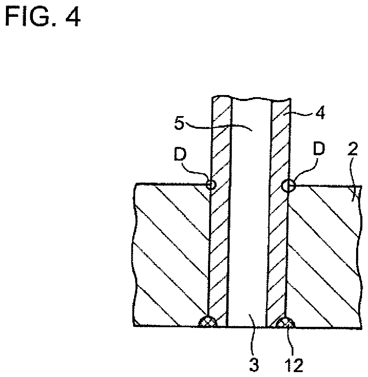

FIG.4 is a sectional view of the tube header with the tube stubs welded thereon in relation to the first embodiment.

In FIG.4, the tube header 2 made of 9Cr steel of ferritic steel has through-holes 3 formed on the outer surface thereof and the through holes 3 have a diameter that is approximately same as the outer diameter of the tube stubs 4 each of which has a bended section. Ends of the tube stubs 4 are respectively inserted in the through-holes 3 approximately to the point where the ends of the tube stubs 4 reach an inner surface of the tube header 2. Further, to facilitate the insertion of the tube stubs in the tube header, it is efficient to cool the tube stubs 4 or warm the tube header 2 beforehand. For instance, when only few of the tube stubs 4 need to be inserted for repair, the tube stubs 4 are cooled beforehand and in contrast, when a number of the tube stubs 4 need to be inserted in the tube header on occasions such as installing a new facility, the tube header is heated beforehand.

Then, the ends of the inserted tube stubs 4 are welded to the inner surface of the tube header 2 by using nickel base alloy as a welding material, and thus forming welding portions 12. It requires seal weld from inside of the tube header 2. The tube header used in a final superheater or reheater of a USC boiler usually has an inner diameter of 300mm and thus, if it is difficult to manually perform the welding, a robot for automatic welding or the like may be used.

According to the first embodiment, the bending stress of the tube stub due to the thermal stress is largest at contact positions (section D of FIG.4) where the tube stubs and the outer surface of the tube header are in contact. However, there is no welding at the contact positions and thus the creep damage due to the bending stress is very little even when the bending stress acts at the contact positions.

At the same time, the tube stubs of austenite stainless steel are subjected to compression stress from the tube header of ferritic steel. However, according to the stress analysis we performed, it was found that the creep life of the tube stubs of austenite stainless steel was higher than that of the tube header made of ferritic steel and thus there was enough creep strength at the contact positions.

As explained above, by using austenite stainless steel for the tube stubs, the durability of the tube stubs against the bending stress caused from the bended section there of or the temperature fluctuation is significantly improved, and the creep damage is suppressed to the degree that practically causes no issue.

Moreover, by using austenite stainless steel for the tube stubs, the creep damage due to the thermal stress is so minimal that it practically causes no issue.

### [Industrial Applicability]

The present invention is applicable as a welding structure of a tube header and tube stubs which successfully improves the durability thereof against creep and fatigue damage of the tube stubs without a different material between the tube header and the tube stubs or additional components.

## Claims

1. A welding structure of a tube header (2) and tube stubs (4), comprising:
a tube header (2) being made of ferritic heat resisting steel;
a plurality of tube stubs (4) which are welded onto an outer surface of the tube header (2), each of the tube stubs (4) having a bended section and having a cross-sectional shape which is flattened at the bended section; and
through-holes (3) which are formed on the outer surface of the tube header (2), the through holes (3) having a diameter that is approximately the same as the outer diameter of the tube stubs (4), wherein:
(i) the plurality of tube stubs (4) are made of austenite stainless steel and are welded to the tube header (2) by using nickel base alloy as a welding material,
(ii) ends of the tube stubs (4) are respectively inserted in the through-holes (3), and
(iii) the ends of the tube stubs (4) inserted in the through-holes (3) are welded to an inner surface of the tube header (2) by using the nickel base alloy as a welding material.

2. The welding structure of the tube heater (2) and the tube stubs (4) according to claim 1, wherein there is no welding at positions where the tube stubs (4) and the outer surface of the tube header (2) are in contact.

## Patentansprüche

1. Schweißstruktur aus einem Rohrverteiler (2) und Rohrstutzen (4), umfassend:
einen Rohrverteiler (2), welcher aus ferritischem, hitzebeständigem Stahl besteht;
eine Vielzahl von Rohrstutzen (4), welche auf eine Außenfläche des Rohrverteilers (2) aufgeschweißt sind, wobei jeder der Rohrstutzen (4) einen gekrümmten Abschnitt aufweist und eine in dem gekrümmten Abschnitt abgeflachte Querschnittsform besitzt; und
Durchgangsbohrungen (3), welche in der Außenfläche des Rohrverteilers (2) ausgebildet sind, wobei die Durchgangsbohrungen (3) einen Durchmesser aufweisen, welcher annähernd dem Außendurchmesser der Rohrstutzen (4) entspricht, wobei:
(i) die Vielzahl von Rohrstutzen (4) aus austenitischem Edelstahl bestehen und unter Verwendung einer als Schweißmaterial fungierenden nickelbasierten Legierung an den Rohrverteiler (2) angeschweißt sind,
(ii) die Enden der Rohrstutzen (4) jeweils in die Durchgangsbohrungen (3) eingebracht sind, und
(iii) die Enden der in die Durchgangsbohrungen (3) eingebrachten Rohrstutzen (4) unter Verwendung einer als Schweißmaterial fungierenden nickelbasierten Legierung an eine Innenfläche des Rohrverteilers (2) angeschweißt sind.

2. Schweißstruktur aus dem Rohrverteiler (2) und den Rohrstutzen (4) nach Anspruch 1, wobei keine Verschweißung an Stellen vorliegt, an denen die Rohrstutzen (4) und die Außenfläche des Rohrverteilers (2) miteinander in Kontakt stehen.

## Revendications

1. Structure de soudage d'un collecteur de tubes (2) et d'ergots de tube (4), comprenant :
un collecteur de tubes (2) réalisé en acier ferritique résistant à la chaleur ;
une pluralité d'ergots de tube (4) qui sont soudés sur une surface extérieure du collecteur de tubes (2), chacun des ergots de tube (4) ayant une section courbée et ayant une forme en coupe qui est aplatie au niveau de la section courbée ; et
des trous traversants (3) qui sont formés sur la surface extérieure du collecteur de tubes (2), les trous traversants (3) ayant un diamètre qui est approximativement le même que le diamètre extérieur des ergots de tube (4), dans laquelle :
(i) la pluralité d'ergots de tube (4) sont réalisés en acier inoxydable austénitique et sont soudés au collecteur de tubes (2) en utilisant un alliage à base de nickel en tant que matériau de soudage,
(ii) des extrémités des ergots de tube (4) sont insérées respectivement dans les trous traversants (3), et
(iii) les extrémités des ergots de tube (4) insérées dans les trous traversants (3) sont soudées à une surface intérieure du collecteur de tubes (2) en utilisant l'alliage à base de nickel en tant que matériau de soudage.

2. Structure de soudage du collecteur de tubes (2) et des ergots de tube (4) selon la revendication 1, dans laquelle il n'a pas de soudage à des positions où les ergots de tube (4) et la surface extérieure du collecteur de tubes (2) sont en contact.
